# EUROPEAN PATENT SPECIFICATION

(11) **EP 2 492 627 B1**
(45) Date of publication and mention of the grant of the patent: **04.06.2014**
(21) Application number: 11155950.6
(22) Date of filing: 25.02.2011
(51) Int. Cl.: F28B 9/06, F01K 9/00

(54) **Cooling system for a solar thermal Rankine cycle**
Kühlsystem für einen solaren Wärme-Rankine-Kreislauf
Système de refroidissement pour cycles de Rankine thermique solaire

(43) Date of publication of application: 29.08.2012
(73) Proprietor: Siemens Aktiengesellschaft, 80333 München (DE)
(72) Inventor: Schill, Stefan, 61246 Finspong (SE)

(56) References cited:
- DE-A1- 3 014 163
- US-A- 4 315 404
- US-A- 4 506 508
- US-A1- 2010 264 656

## Description

The present invention relates to a cooling system for the condenser in a Rankine cycle, especially in a solar thermal Rankine cycle. US 4 315 404 discloses a cooling system with the features of the preamble of claim 1 usable for solar cycles. Cooling systems for Rankine cycles are presently known. Such known cooling systems cool the condenser in order to create a low pressure end of the steam turbine. Steam with high pressure and temperature is entered in the high pressure end of the steam turbine and the pressure difference between the high pressure end and the low pressure end of the steam turbine drives the steam through the steam turbine whereby the heat content of the steam is converted into steam kinetic energy that simultaneously by the steam turbine is transformed into shaft mechanical energy. This shaft mechanical energy is often further transformed into electrical energy by the use of a generator but it could also be used for other purposes as e.g. direct drive of a pump or a compressor. The better the cooling of the condenser gets the lower the condenser pressure gets and thus the more of the steam heat content could be converted into shaft mechanical energy by the steam turbine.

For example US 4,315,404 discloses a cooling system for power generating plant using split or partitioned heat exchangers. That system of high complexity uses several different heat cycles for its complex cooling structure.

Known cooling systems for the condenser could utilize sea water, lake water or river water that is pumped through the condensers cooling medium side. Other known cooling systems, if no such water source is available or if it has too high temperature, is to cool the condenser with the ambient air instead, either direct or indirect. In the direct method, air is blown through the condensers cooling medium side. In the indirect method water is still used for cooling of the condenser but this water is in a more or less closed circuit and is being cooled down by the surrounding air. Principally two different methods could be used for cooling of the water, the dry method or the wet method. In both methods a cooling tower is often used for cooling of the water. The dry method is often used for cooling of the water. The dry method implies that air and water are never getting in physical contact with each other because they are flowing on each side of a heat exchanger. In the wet method, water and air are in direct physical contact and therefore a part of the water is absorbed by the air and disappears with the air. In a cooling tower the air is flowing from the bottom to the top either by free convection or by the aid of fans. In the dry method the heat exchanger for cooling of the water is situated in the cooling tower whereas in the wet method the cooling water is sprayed into the top of the cooling tower and the water is cooled by the upflowing air as the water falls to the bottom of the cooling tower. In the wet method there is a bassin in the bottom of the tower that collects the remaining cooling water that has not been absorbed by the air. In this bassin usually also new water is added to replace the losses.

Solar thermal Rankine cycles are often used in areas with lack of natural cooling water sources like sea, lakes or rivers. Therefore air is normally used for cooling of the condenser, either with the direct method or with any of the indirect methods. This invention relates to air cooled indirect methods only.

In typical areas where solar thermal Rankine cycles are used the climate is often such that the ambient air is relatively hot during day time and relatively cold during night time. Therefore the useable air surrounding the plant has a relatively high temperature during day time, so that it is not possible to cool the condenser to as low temperature as during night time. This results in a higher condenser pressure during day time and thus reduced plant efficiency. Although there exist methods to store solar heat from day time to night time so that a solar thermal power plant can be operated both day and night, the day time operation is most important. This is both because the power consumption is usually highest during day time and because storing of the solar heat to night time is expensive and associated with significant thermal losses.

It is an object of the present invention to find a solution for the problems listed above. In particular it is an object of the present invention to increase the cooling effect of an inventive cooling system and thereby to increase the thermodynamic efficiency of a solar thermal Rankine cycle.

The object above is achieved by a cooling system with the features of independent claim 1. Further advantages are for example achieved by a cooling system according to the depending sub claims. Moreover the present object is achieved by a steam turbine according to the features of independent claim 8 and a method according to the features of independent claim 9.

According to the present invention, a cooling system for solar steam turbines comprises at least one fluid reservoir which is filled with a cooling fluid. Such cooling fluid can for example be water or any other kind of fluid which is in particular provided with a relatively high heat capacity.

Furthermore, a cooling system according to the present invention comprises at least one condenser with a reservoir side and a steam side. In particular the condenser is carried out as a heat exchanger. The steam side is in thermal connection to the solar steam turbine to create a low pressure in the exhaust of the solar steam turbine. For example can the steam side be in direct contact with the steam from the solar steam turbine. Moreover the fluid reservoir is in fluid communication with the reservoir side of the condenser such that the cooling fluid is enabled to flow from the fluid reservoir through the reservoir side and to re-enter the fluid reservoir. In other words, the cooling fluid can flow from the fluid reservoir through the reservoir side and back to the fluid reservoir. During its way along that flow path, in particular during the flow through the reservoir side of the condenser, a thermal exchange can take place between the steam from the solar steam turbine and the cooling fluid. Thereby the cooling fluid is heated up by the steam from the solar steam turbine and the steam is cooled down and condensed whereby a low pressure is created in the solar steam turbine exhaust.

For an inventive cooling system at least one cooling device is provided, which is configured to cool the cooling fluid. The cooling device comprises a fluid side and a cooling side, which is in thermal connection with the surrounding of the cooling device. Moreover, the fluid reservoir is in fluid communication with the fluid side of the cooling device such that the cooling fluid is enabled to flow from the fluid reservoir through the fluid side of the cooling device to be cooled down and to re-enter the fluid reservoir. In other words, the cooling fluid can also flow through the cooling device, namely through the fluid side of such cooling device. While flowing through such fluid side of the cooling device, which is in thermal connection with the cooling side and thereby also in thermal connection with the surrounding of the cooling device, the cooling fluid is cooled down by the utilization of the air surrounding the cooling device.

In a cooling system according to the present invention the cooling of the condenser can be understand to be separated into two time steps. The primary cooling, namely the cooling and condensing of the steam from the solar steam turbine, takes place during the use of the steam turbine, namely during daytime, when steam is produced by a solar system. The cooling of the cooling fluid, which is heated up during the primary cooling with the cooling fluid, can be shifted timely, in particular can take place during nighttime, when the surrounding air of the whole system, in particular of the cooling device, has cooled down to a lower ambient temperature. Such shifted cooling of the cooling fluid can be understood as secondary cooling. Thereby the secondary effect of the cooling fluid is that it can be cooled down by the surrounding air by the use of the cooling device, such that, before the next circle of usage of the solar steam turbine begins, the cooling fluid has been cooled down and therefore has been prepared with the necessary low temperature for an increased cooling of the condenser.

In the case that a solar heat storage is used to prolong the operation time for the solar steam turbine to more than day time, the cooling device can be dimensioned such that it simultaneously and in parallel could produce cold cooling fluid, during night time operation, for both the instant condenser cooling need and for cooling of the cooling fluid reservoir.

By the use of a fluid reservoir with the cooling fluid according to the present invention the complexity of the whole cooling system is increased, but thereby a time shifting of the cooling with the ambient air is achieved. Due to that the lower temperatures of the nighttime at the operation area of the solar steam turbine can be used for cooling the cooling fluid, while the cooling fluid in its cold state is used for cooling and condensing of the steam from the solar steam turbine during daytime. Thereby the temperature of the cold air during the night can, in other words, be saved in the cooling fluid for cooling the condenser during daytime. With respect to a comparison to already known cooling systems, with the cooling system according to the present invention a better cooling effect and thereby a higher thermal efficiency of the solar thermal plant can be achieved.

It can be of advantage, if a cooling system according to the present invention is provided with at least one pump, which is configured for pumping the cooling fluid from the fluid reservoir through the reservoir side of the condenser and/or from the fluid reservoir through the fluid side of the cooling device. In other words, the use of at least one pump, in particular two pumps, namely one pump for the condenser fluid communication and one pump for the cooling device fluid communication provides forced fluid communication in the respective flow path. The use of a pump creates more design freedom as to the explicit location of the fluid reservoir, due to fact that no gravity influence has to be considered while constructing the location of the fluid reservoir with respect to the location of the condenser and the cooling device. Considering that such a pump is a critical component for the whole operation of the plant and the large costs associated with a standstill it could be advantageous to have redundancy.

It could also be of advantage, if the cooling device of a cooling system according to the present invention is a heat exchanger, the indirect dry method described above, as it minimizes the water consumption. If enough water is available , and the surrounding air has not a to high relative humidity, the indirect wet method is however to prefer as it makes it possible to cool the cooling fluid to a lower temperature compared to the indirect dry method.

The heat exchanger itself can be carried out in different ways. For example it is possible that the heat exchanger is configured to comprise pipes, which are in thermal connected with the surrounding of the cooling device. The surrounding air can pass along the surfaces of the pipes and thereby exchange the heat with the cooling fluid to be cooled within such pipes. Such a cooling device can be optimized by providing a forced flow of the surrounding air along the surface of the pipes. Such forced flow can for example be achieved by the use of a ventilation system.

According to one possibility of the present invention, the cooling system can use a cooling fluid in form of a liquid, in particular of liquid comprising water. The liquid can for example be 100% water, but also water together with additional chemicals, for example Natriumchlorid or the like. The advantage of the use of liquid as cooling fluid is the low compressibility of the liquid and moreover the relatively high heat capacity with respect to the necessary volume. In particular the use of a liquid comprising water has a very good correlation between the volume of the cooling fluid and the heat capacity.

According to one preferred embodiment of the present invention, the cooling system can be configured such that the cooling device is in fluid communication with the surroundings of the cooling device and such that gas, in particular air, surrounding the cooling device is enabled to flow through the cooling side of the cooling device. By the use of air flowing from the surrounding of the cooling device, the cooling effect during nighttime with a cooling device can be increased. The respective advantages have already been explained above with respect to the use of a heat exchanger for a cooling device.

It is also possible according to one embodiment of the present invention that the cooling system is configured such that the fluid reservoir comprises at least a first fluid tank and a second fluid tank. The fluid tanks are separate from each other, wherein the first fluid tank, the second fluid tank, the reservoir side of the condenser and the fluid side of the cooling device are in fluid communication. Such fluid communication is configured such that cooling fluid from the first fluid tank is enabled to flow to the reservoir side of the condenser and to enter the second fluid tank. Moreover the fluid communication is configured such that the cooling fluid from the second fluid tank is enabled to flow through the fluid side of the cooling device and to enter the first fluid tank.

In other words, the first and the second fluid tank comprise different temperatures of cooling fluid. The first fluid tank can be labeled as the cold tank, while the second fluid tank can be labeled as a hot tank. By following the flow path from the first fluid tank through the reservoir side of the condenser into the second fluid tank, the steam from the steam turbine is cooled down and condensed and thereby the cooling fluid is heated up. The heated cooling fluid enters the second fluid tank and is stored there in the heated state. This direction of the flow from the first fluid tank into the second fluid tank can also be labeled as the daytime direction of the cooling fluid or the primary cooling effect. The nighttime direction is the other way around, namely from the second fluid tank, namely the hot tank, into the first fluid tank, namely the cold tank. The flow part from the second fluid tank into the first fluid tank is through the fluid side of the cooling device, such that the cooling fluid is cooled down while following that flow path. Thereby the cooled down cooling fluid re-enters the first fluid tank in a cold state, such that it is ready to be used in the next daytime circle for cooling and condensing steam from the solar steam turbine.

With respect to such an embodiment of the present invention, the two tanks are also described in a way of example. It is also possible that more than two fluid tanks can be comprised within one fluid reservoir. The fluid tanks must be separated from each other with respect to the exchange of fluid between the two tanks on ways other than the predefined fluid paths of the fluid communications. Thereby, the fluid tanks can be provided within one container of one fluid reservoir. It is also possible that the fluid tanks are located separately from each other only connected by pipes forming the respective necessary fluid communication for the flow paths.

It is also possible according to one preferred embodiment of the present invention that the cooling system is configured such that for the fluid communication between the fluid reservoir and the reservoir side of the condenser and between the fluid reservoir and the fluid side of the cooling device fluid pipes are provided. These are fluid pipes, which can be rigid pipes or elastic or flexible pipes, which provide one the possibility to transport the cooling fluid along the fluid communication, namely the predefined fluid paths according to the present invention.

A further aspect of the present invention is a solar thermal Rankine cycle , including a solar steam turbine for generating electricity or mechanical shaft power, from solar heated steam. Such a solar thermal Rankine cycle comprises a cooling system with the features of the present invention. The solar steam turbine can for example be a turbine with a low pressure turbine, which is used as a condensing solar steam turbine.

A further aspect of the present invention is a method for cooling and condensing steam from a solar steam turbine, comprising the following steps:
- Providing cold cooling fluid,
- Cooling and condensing the steam from the solar steam turbine under the use of cold cooling fluid and thereby heating the cooling fluid while the solar steam turbine is working through daytime,
- Storing the heated cooling fluid, and
- Cooling the heated cooling fluid with the surrounding air through nighttime.

The method is for example carried out by a cooling system of the present invention. According to an inventive method it is to be understood that the cooling of the cooling fluid is shifted to the nighttime, such that such part of the day is used, when the surrounding air has the lowest temperature. The use of the lowest temperature results in the maximum cooling effect for the cooling of the cooling fluid and thereby produces the lowest temperature of the cooling fluid. Due to the fact that the cooling fluid in particular has a higher heat capacity than the surrounding air, the low temperature of the cooling fluid can be conserved or saved from nighttime to daytime, such that during daytime, and thereby during the use of the solar steam turbine, the saved low temperature of the cooling fluid is used for cooling the steam. In other words, the low temperature of the surrounding air at the nighttime is timely transferred for cooling and condensing the steam from the steam turbine by the cooling fluid. The cooling and condensing of the steam from the steam turbine therefore comprises two steps, while the use of the cold air during nighttime is timely shifted by the use of the cooling fluid.

It could be of advantage, if the heated cooling fluid according to a method of the present invention is stored separately from the cold cooling fluid. This can for example take place within two separate cooling fluid tanks, which are part of one fluid reservoir. A method according to the present invention is in particular used for a cooling system according to the present invention.

In the following, the present invention will be described by a way of example with reference to the accompany drawings:
- Figure 1: shows a schematic view of one embodiment of a cooling system,
- Figure 2: shows a further embodiment of a cooling system,
- Figure 3: shows a further embodiment of a cooling system,
- Figure 4: shows one example for the temperature curve of the ambient air temperature of a cooling system,
- Figure 5: shows a modification of fig. 1,
- Figure 6: shows a modification of fig. 2,
- Figure 7: shows a modification of fig. 3.

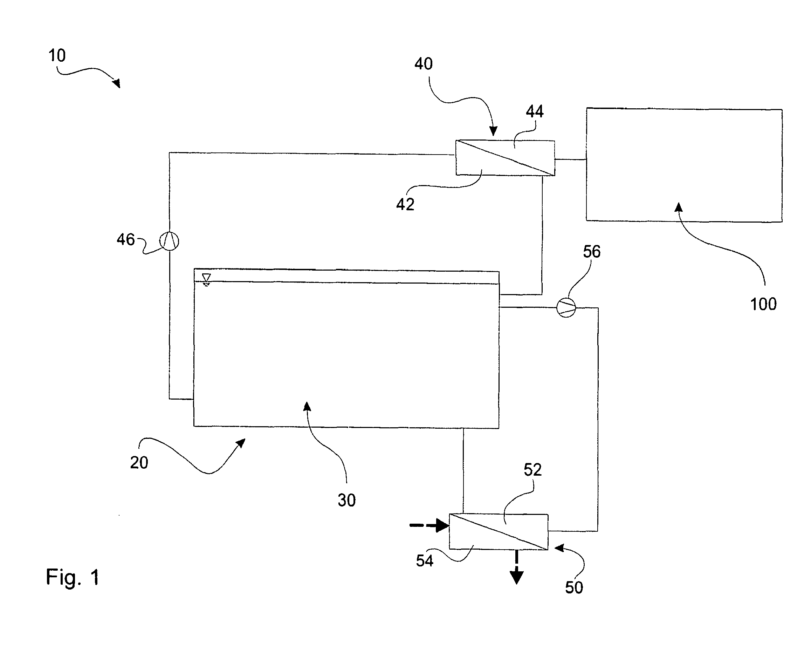

In fig. 1 a schematic view of an embodiment of the present invention is shown. The cooling system 10 comprises a fluid reservoir 20 which is filled with cooling fluid 30. The cooling fluid 30 comprises water, in particular almost 100% water. The cooling fluid 30 is used for cooling and condensing the steam from a solar steam turbine 100. For such cooling effect, one condenser 40 is provided, which comprises a reservoir side 42 as well as a steam side 44. The reservoir side 42 and the steam side 44 are configured for thermal exchange, while the steam side 44 comprises a thermal connection to the steam from the solar steam turbine 100.

Moreover, a pump 46 is provided within the fluid communication part between the fluid reservoir 20 and the condenser 40. Such pump 46 forces the cooling fluid 30 to follow the flow path through the reservoir side 42 of the condenser 40. By flowing through the reservoir side 42 of the condenser 40, the cooling fluid receives heat from the steam of the solar steam turbine 100 and is thereby heated up. Moreover, the steam from the steam turbine 100 is cooled down and condensed in such way. In other words, the cooling fluid 30 is heated up during such cooling circle and re-enters the fluid reservoir 20 in a heated state.

Aforesaid description is carried out during daytime for cooling and condensing of the steam from the solar steam turbine 100 during the operation of the solar steam turbine 100. Due to the fact that a solar system might not produce any steam for the use in a solar steam turbine 100 during nighttime, due to the lack of sunshine, the solar steam turbine 100 could be out of use during nighttime. With the use of a solar heat storage it is however possible to operate the solar steam turbine also during night time. Moreover, during nighttime, the surrounding air of the cooling system has a lower temperature, such that low temperature air can be used for cooling the cooling fluid. To do so, the cooling system 10 of the present embodiment of fig. 1 is provided with a fluid communication between a cooling device 50 and the fluid reservoir 20.

Due to the gravity effect and that cold water has a higher density than warm water the hottest water will be found in the top of a reservoir 20 and the coldest water in the bottom of the same reservoir 20. Therefore cooling water for the condenser 40 is been taken from the bottom and likewise hot water to be cold down is been taken from the top of the reservoir 20.

The cooling device 50 is provided with a fluid side 52 and a cooling side 54. Moreover a pump 56 is provided, which forces the cooling fluid 30 from the fluid reservoir 20 through the fluid side 52 of the cooling device 50. A cooling device 50 can for example be carried out as a heat exchanger. Within the cooling device 50 the cooling fluid 30 is cooled down due to thermal exchange with another fluid, for example surrounding air, on the cooling side 54 of the cooling device 50. Thereby cooled cooling fluid 30 re-enters the fluid reservoir 20. Aforesaid operation mode can also be labeled as the night operation circle or the secondary cooling effect and is used for cooling the cooling fluid 30 within a fluid reservoir 20.

After the end of the nighttime, the cooling fluid 30 within the fluid reservoir 20 is preferably in the proximity of the lowest temperature of the ambient air of the cooling device 50. Thereby the cooling fluid 30 can conserve or save such low temperature for cooling and condensing the steam from the solar steam turbine 100 during daytime. In other words, the low temperature of the ambient air of the nighttime is timely shifted by the use of cooling fluid 30 in a cooling system 10 of the present invention for cooling the steam within the steam turbine 100 during daytime.

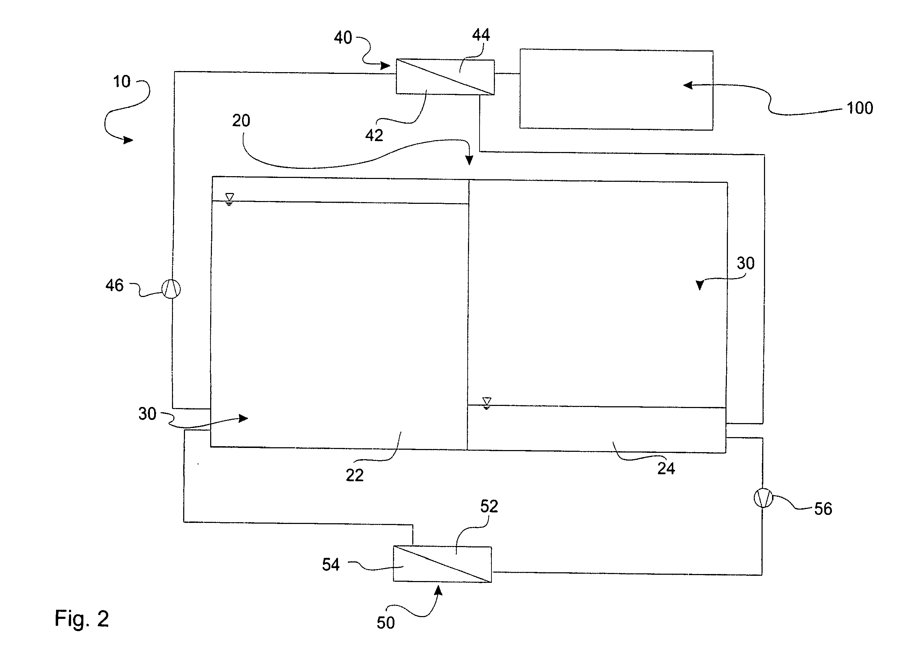

Fig. 2 shows an alternative embodiment of the present invention. This embodiment of a cooling system 10 of the present invention is relatively similar to the embodiment of fig. 1. Therefore identical features are labeled with identical references and only the differences will be described below.

In opposite to fig. 1, the cooling system 10 of the embodiment of fig. 2 comprises a fluid reservoir 20 with two fluid tanks 22, 24. The two fluid tanks 22, 24 are separated from each other and are only connected by a fluid communication which comprises a flow path from the first fluid tank 22 through the reservoir side 42 of the condenser 40 into the second fluid tank 24. A further fluid communication provides a fluid path from the second fluid tank 24 through the fluid side 52 of the cooling device 50 back into the first fluid tank 22. In other words, the first fluid tank 22 can be labeled as a cold fluid tank, while the second fluid tank 24 can be labeled as a hot fluid tank.

The situation, which is depicted in figure 2 can also be labeled as the situation at the start of the cooling circle during daytime. The first fluid tank 22 is relatively full with a cold cooling fluid 30, which can be used during daytime to cool and condense the steam from the solar steam turbine 100. By using the cooling effect of the cooling fluid 30, the fluid is heated up within the reservoir side 42 of the condenser 40 and is stored in a heated state within the second fluid tank 24.

The night circle, namely the cooling of the heated up cooling fluid 30, can be carried out from the second fluid tank 24 through the fluid side 52 of the cooling device 50 back into the first fluid tank 22. By following that flow path of the fluid communication, the cooling fluid 30 is cooled down, for example by the use of ambient air with a low temperature on the cooling side 54 of the cooling device 50. In other words, the level of cooling fluid 30 within the two fluid tanks 22 and 24 changes continuously. During the daytime circle or the so called primary cooling effect, the cooling fluid 30 is transported from the first fluid tank 22 into the second fluid tank 24 and is heated up thereby. In the night circle or the so called secondary cooling effect, the cooling fluid 30 is transported from the second fluid tank 24 into the first fluid tank 22 and is thereby cooled down.

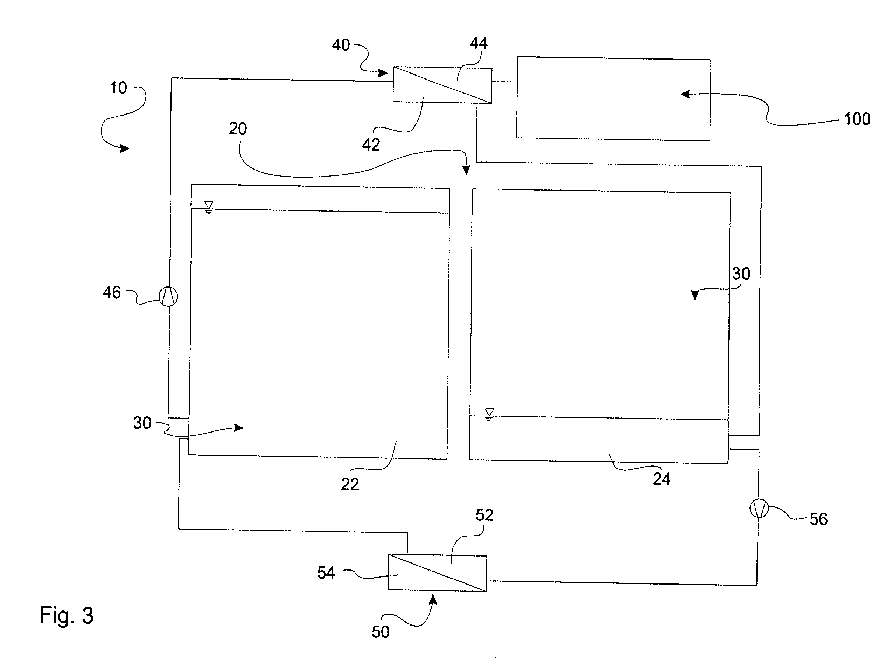

Fig. 3 shows a further alternative with respect to the embodiment of fig. 2. Once more, identical features are labeled with identical references and only the differences will be described below.

As it can be seen in fig. 3, the two fluid tanks 22, 24 do not have to form one single container, but can be totally separate from each other. In particular with respect to freedom of design, the use of separate fluid tanks 22, 24 which are not combined in one single container of the fluid reservoir 20, can help to build cooling systems 10 according to the present invention with less complexity and less need of mounting volume. Moreover, such configuration enables better thermal isolation between the two fluid tanks 22, 24. This reduces the risk that heat is transferred from the second fluid tank 24, the hot fluid tank, to the first fluid tank 22, the cold fluid tank.

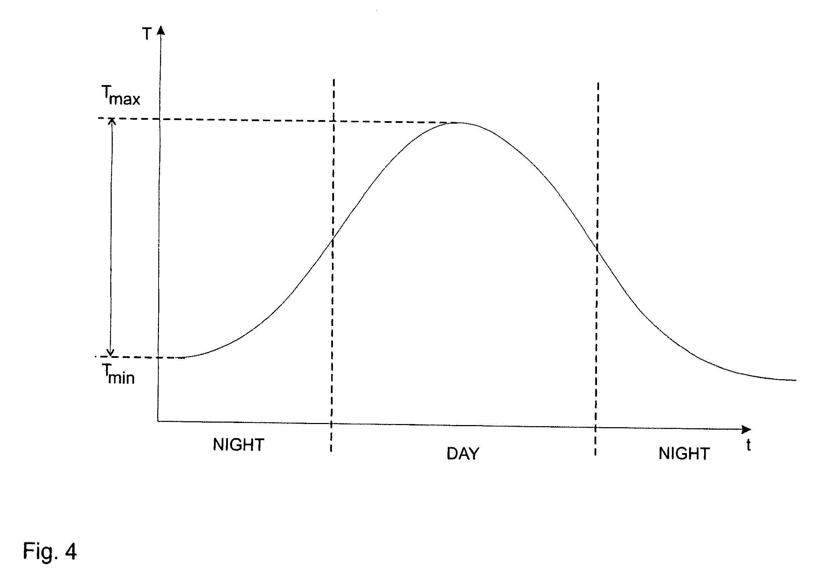

In fig. 4 one example of the curve of a temperature of the ambient air around the cooling system 10 is shown. As solar systems, comprising solar steam turbines 100, are usually used in areas of the world which have high impact of solar influence, for example desert areas of the world, relatively high differences between day- and nighttime temperature of the ambient air surrounding the solar system result. For example, the difference between the maximum temperature during daytime and the minimum temperature during nighttime can be between 14° to 20° C.

According to the curve in fig. 4, the daytime can be defined as the time while the solar systems produces steam for the solar steam turbine 100 and thereby the solar steam turbine 100 is working. If there is a solar heat storage the solar system will also store heat in it during day time. After the sun has disappeared, the solar system is not able to produce steam any longer, unless a solar heat storage is used, and thereby the day circle of the solar steam turbine 100 has ended. Moreover, normal or so called primary cooling is not necessary after the end of the use of the solar steam turbine 100.

As it can be seen in fig. 4, the ambient air temperature is relatively cool during nighttime. Due to the fact that according to a cooling system 10 of the present invention, the cooling fluid 30 is cooled with the nighttime air, the relatively low temperature of the air at nighttime is used for cooling the cooling fluid 30. Due to the fact that the cooling fluid 30 has in particular a relatively high heat capacity, such relatively cold temperature of the nighttime is conserved or saved by the cooling fluid 30 and can be used for cooling the solar steam turbine 100 during daytime despite the relatively high temperature of the ambient air during daytime.

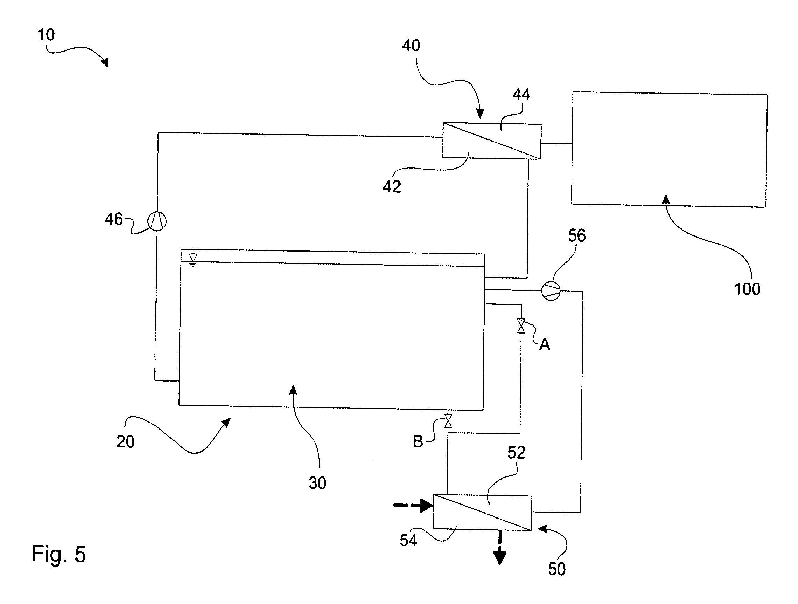

With reference to figs. 5, 6 and 7, a further development of the present invention is described. Said development is based on the embodiments depicted in figs. 1, 2 and 3. Therefore, same features are labeled with the same reference signs and will not be described once more.

All said further developments have in common that the cooling via the cooling device 50 also takes place during daytime. Although, the cooling effect, being achieved by the cooling device during daytime, is a lot less than during night time, it still exists. Therefore, by adding further fluid communication lines the possibility of day time use of the cooling device can be provided for the embodiments of figs. 1, 2 and 3. Thereby, the cooling fluid 30 has a at least slightly reduced temperature at the end of the usage of the solar steam turbine at the end of the day, compared to the exclusion of the cooling device during day time. This results in a further improved cooling efficiency during night time, namely less time for cooling and/or a lower final temperature at the begin of the next day time usage cycle of the solar steam turbine.

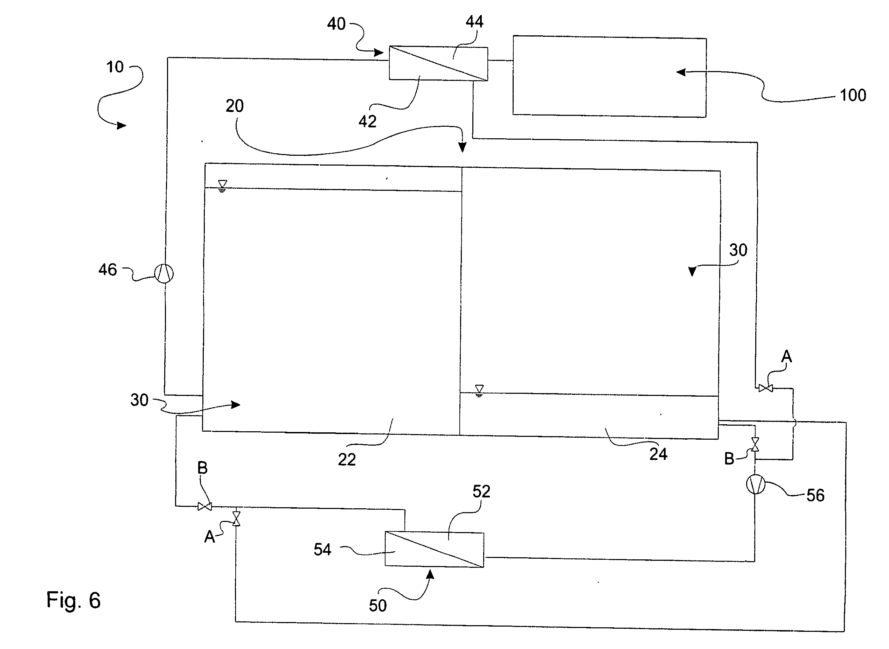

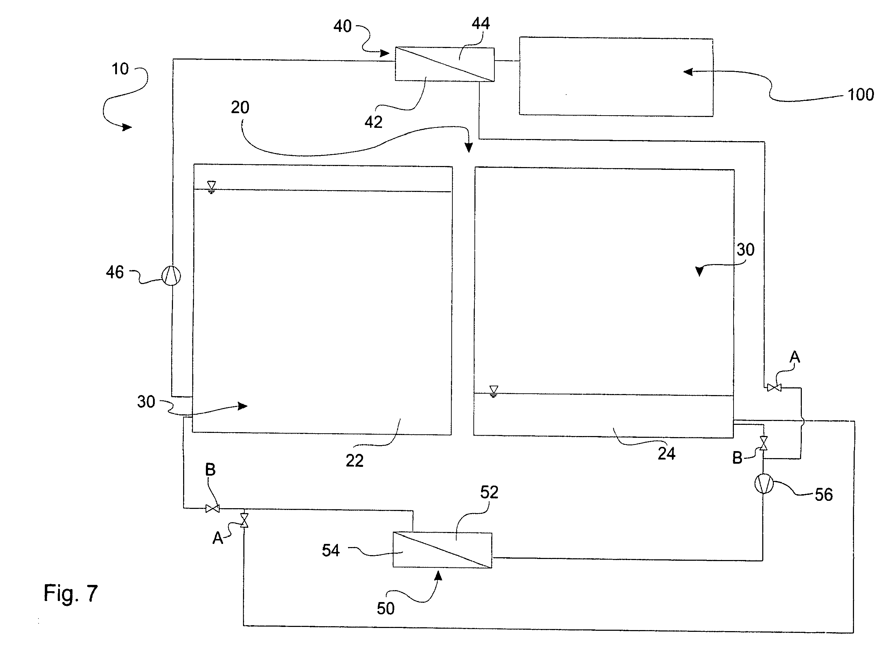

Fig. 5 is a development of the embodiment of fig. 1. During night time the nighttime valve B is open and the daytime valve A is closed. The night time cycle is identical to the one described above. During day time, the daytime valve A is open and the nighttime valve B is closed. Thereby the cooling device 50 can also be used during daytime with the difference that the cooled cooling fluid 30 is relatively warm and therefore re-enters the fluid reservoir 20 at an upper level. This avoids mixture of different temperatures at lower levels inside the fluid reservoir 20. An identical modification has been carried out to the embodiments of figs. 2 and 3 resulting in the embodiments of figs. 6 and 7. In identical manner, the cooling device 50 of said embodiments is also used during daytime and thereby the cooling efficiency of the whole cooling system 10 is further improved.

## Claims

1. Cooling system (10) for solar thermal Rankine cycles comprising at least one solar steam turbine (100) and at least one fluid reservoir (20) filled with a cooling fluid (30), at least one condenser (40) with a reservoir side (42) and a steam side (44), which is in thermal connection to the at least one solar steam turbine (100) to cool and condense the steam from the at least one solar steam turbine (100), and wherein the at least one fluid reservoir (20) is in fluid communication with the reservoir side (42) of the at least one condenser (40) such that the cooling fluid (30) is enabled to flow from the at least one fluid reservoir (20) through the reservoir side (42) and to re-enter the at least one fluid reservoir (20), and at least one cooling device (50) for cooling the cooling fluid (30), the at least one cooling device (50) comprising a fluid side (52) and a cooling side (54), wherein the at least one fluid reservoir (20) is in fluid communication with the fluid side (52) of the cooling device (50) such that the cooling fluid (30) is enabled to flow from the at least one fluid reservoir (20) through the fluid side (52) of the cooling device (50) to be cooled down and to re-enter the at least one fluid reservoir (20), **characterised in that** the cooling side (54) of the at least one cooling device (50) is in thermal connection with the surrounding of the cooling device (50), and the at least one cooling device (50) is in fluid communication with the surroundings of the cooling device (50) such that gas, in particular air, surrounding the at least one cooling device (50) is enabled to flow through the cooling side (54) of the at least one cooling device (50).

2. Cooling system (10) according to claim 1, **characterised in that** at least one pump (46, 56) is provided for pumping the cooling fluid (30) from the at least one fluid reservoir (20) through the reservoir side (42) of the at leat one condenser (40) and/or from the at least one fluid reservoir (20) through the fluid side (52) of the at least one cooling device (50).

3. Cooling system (10) according to any of claims 1 or 2, **characterised in that** the at least one cooling device (50) is a heat exchanger.

4. Cooling system (10) according to any of claims 1 to 3, **characterised in that** the cooling fluid (30) is a liquid, in particular comprising water.

5. Cooling system (10) according to any of claims 1 to 4, **characterised in that** the at least one fluid reservoir (20) comprises at least a first fluid tank (22) and a second fluid tank (24), which are separate from each other, wherein the first fluid tank (22), he second fluid tank (24), the reservoir side (42) of the at least one condenser (40) and the fluid side (52) of the at least one cooling device (50) are in fluid communication such that cooling fluid (30) from the first fluid tank (22) is enabled to flow through the reservoir side (42) of the condenser (40) and to enter the second fluid tank (24) and wherein the cooling fluid (30) from the second fluid tank (24) is enabled to flow through the fluid side (52) of the at least one cooling device (50) and to enter the first fluid tank (22).

6. Cooling system according to any of claims 1 to 5, **characterised in that** the fluid communication between the at least one fluid reservoir (20) and the reservoir side (42) of the at least one condenser (40) and between the at least one fluid reservoir (20) and the fluid side (52) of the at least one cooling device (50) comprises at least one fluid pipe.

7. Solar steam turbine (100) for generating electricity or shaft power for mechanical drive from solar heated steam, comprising a cooling system (10) with the features of any of claims 1 to 6.

8. Method for cooling and condensing steam from a solar steam turbine (100) comprising the following steps:
- Providing cold cooling fluid (30),
- Cooling and condensing the steam from the solar steam turbine (100) under the use of the cold cooling fluid (30) and thereby heating the cooling fluid (30) while the solar steam turbine (100) is working through daytime,
- Storing the heated cooling fluid (30), and
- Cooling the heated cooling fluid (30) with the surrounding air while the solar steam turbine (100) is not working through night time.
- Cooling the heated cooling fluid (30) with the surrounding air for the next day time operation and at the same time producing cooling water for the condensers instant need (40) while the solar steam turbine (100) is working with steam from a solar heat storage through night time,
wherein the method is carried out with a cooling system (10) with the features of any of claims 1 to 6.

9. Method according to claim 8, **characterised in that** the heated cooling fluid (30) is stored separately from the cold cooling fluid (30).

## Patentansprüche

1. Kühlsystem (10) für solarthermische Clausius-Rankine-Kreisprozesse, das Folgendes umfasst: mindestens eine solarbetriebene Dampfturbine (100) und mindestens einen mit einem Kühlfluid (30) gefüllten Fluidbehälter (20), mindestens einen Kondensator (40) mit einer Behälterseite (42) und einer Dampfseite (44), die thermisch mit der mindestens einen solarbetriebenen Dampfturbine (100) verbunden ist und den Dampf aus der mindestens einen solarbetriebenen Dampfturbine (100) kühlt und kondensieren lässt, und wobei der mindestens eine Fluidbehälter (20) eine solche Fluidverbindung zur Behälterseite (42) des mindestens einen Kondensators (40) aufweist, dass das Kühlfluid (30) von dem mindestens einen Fluidbehälter (20) durch die Behälterseite (42) und wieder in den mindestens einen Fluidbehälter (20) fließen kann, und mindestens eine Kühlvorrichtung (50) zum Kühlen des Kühlfluids (30), wobei die mindestens eine Kühlvorrichtung (50) eine Fluidseite (52) und eine Kühlseite (54) umfasst, wobei der mindestens eine Fluidbehälter (20) eine solche Fluidverbindung zur Fluidseite (52) der Kühlvorrichtung (50) aufweist, dass das Kühlfluid (30) zum Abkühlen von dem mindestens einen Fluidbehälter (20) durch die Fluidseite (52) der Kühlvorrichtung (50) und wieder in den mindestens einen Fluidbehälter (20) fließen kann, **dadurch gekennzeichnet, dass** die Kühlseite (54) der mindestens einen Kühlvorrichtung (50) thermisch mit der Umgebung der Kühlvorrichtung (50) verbunden ist und die mindestens eine Kühlvorrichtung (50) eine solche Fluidverbindung zur Umgebung der Kühlvorrichtung (50) aufweist, dass die mindestens eine Kühlvorrichtung (50) umgebendes Gas, insbesondere Luft, durch die Kühlseite (54) der mindestens einen Kühlvorrichtung (50) strömen kann.

2. Kühlsystem (10) nach Anspruch 1, **dadurch gekennzeichnet, dass** mindestens eine Pumpe (46, 56) zum Pumpen des Kühlfluids (30) aus dem mindestens einen Fluidbehälter (20) durch die Behälterseite (42) des mindestens einen Kondensators (40) und/ oder aus dem mindestens einen Fluidbehälter (20) durch die Fluidseite (52) der mindestens einen Kühlvorrichtung (50) vorgesehen ist.

3. Kühlsystem (10) nach Anspruch 1 oder 2, **dadurch gekennzeichnet, dass** es sich bei der mindestens einen Kühlvorrichtung (50) um einen Wärmetauscher handelt.

4. Kühlsystem (10) nach einem der Ansprüche 1 bis 3, **dadurch gekennzeichnet, dass** es sich bei dem Kühlfluid (30) um eine Flüssigkeit handelt, die insbesondere Wasser umfasst.

5. Kühlsystem (10) nach einem der Ansprüche 1 bis 4, **dadurch gekennzeichnet, dass** der mindestens eine Fluidbehälter (20) mindestens einen ersten Fluidtank (22) und einen zweiten Fluidtank (24) umfasst, die voneinander getrennt sind, wobei der erste Fluidtank (22), der zweite Fluidtank (24), die Behälterseite (42) des mindestens einen Kondensators (40) und die Fluidseite (52) der mindestens einen Kühlvorrichtung (50) eine solche Fluidverbindung aufweisen, dass Kühlfluid (30) aus dem ersten Fluidtank (22) durch die Behälterseite (42) des Kondensators (40) und in den zweiten Fluidtank (24) fließen kann und wobei das Kühlfluid (30) aus dem zweiten Fluidtank (24) durch die Fluidseite (52) der mindestens einen Kühlvorrichtung (50) und in den ersten Fluidtank (22) fließen kann.

6. Kühlsystem nach einem der Ansprüche 1 bis 5, **dadurch gekennzeichnet, dass** die Fluidverbindung zwischen dem mindestens einen Fluidbehälter (20) und der Behälterseite (42) des mindestens einen Kondensators (40) und zwischen dem mindestens einen Fluidbehälter (20) und der Fluidseite (52) der mindestens einen Kühlvorrichtung (50) mindestens ein Fluidrohr umfasst.

7. Solarbetriebene Dampfturbine (100) zum Erzeugen von Strom oder Wellenleistung für den mechanischen Antrieb durch solarerwärmten Dampf, die ein Kühlsystem (10) mit den Merkmalen eines der Ansprüche 1 bis 6 umfasst.

8. Verfahren zum Kühlen und Kondensieren von Dampf aus einer solarbetriebenen Dampfturbine (100), das folgende Schritte umfasst:
- Bereitstellen von kaltem Kühlfluid (30),
- Kühlen und Kondensieren des Dampfes aus der solarbetriebenen Dampfturbine (100) unter Verwendung des kalten Kühlfluids (30) und dadurch Erwärmen des Kühlfluids (30), während die solarbetriebene Dampfturbine (100) tagsüber läuft,
- Speichern des erwärmten Kühlfluids (30) und
- Kühlen des erwärmten Kühlfluids (30) mit der Umgebungsluft, während die solarbetriebene Dampfturbine (100) nachtsüber nicht läuft,
- Kühlen des erwärmten Kühlfluids (30) mit der Umgebungsluft für den nächsten Tagesbetrieb und gleichzeitiges Erzeugen von Kühlwasser für den unmittelbaren Bedarf des Kondensators (40), während die solarbetriebene Dampfturbine (100) nachtsüber mit dem Dampf aus einem Solarwärmespeicher arbeitet,
wobei das Verfahren mit einem Kühlsystem (10) mit den Merkmalen aus einem der Ansprüche 1 bis 6 ausgeführt wird.

9. Verfahren nach Anspruch 8, **dadurch gekennzeichnet, dass** das erwärmte Kühlfluid (30) separat von dem kalten Kühlfluid (30) gespeichert wird.

## Revendications

1. Système de refroidissement (10) pour cycle de Rankine thermique solaire comprenant au moins une turbine à vapeur solaire (100) et au moins un réservoir de fluide (20) rempli d'un fluide de refroidissement (30), au moins un condenseur (40) avec un côté réservoir (42) et un côté vapeur (44), qui est en liaison thermique avec l'au moins une turbine à vapeur solaire (100) pour refroidir et condenser la vapeur provenant de l'au moins une turbine à vapeur solaire (100), et dans lequel l'au moins un réservoir de fluide (20) est en communication fluide avec le côté réservoir (42) de l'au moins un condenseur (40),de sorte que le fluide de refroidissement (30) a la possibilité de s'écouler de l'au moins un réservoir de fluide (20) à travers le côté réservoir (42) et de retourner dans l'au moins un réservoir de fluide (20), et au moins un dispositif de refroidissement (50) pour refroidir le fluide de refroidissement (30), l'au moins un dispositif de refroidissement (50) comprenant un côté fluide (52) et un côté refroidissement (54), dans lequel l'au moins un réservoir de fluide (20) est en communication fluide avec le côté fluide (52) du dispositif de refroidissement (50), de sorte que le fluide de refroidissement (30) a la possibilité de s'écouler de l'au moins un réservoir de fluide (20) à travers le côté fluide (52) du dispositif de refroidissement (50) pour être refroidi et de retourner dans l'au moins un réservoir de fluide (20), **caractérisé en ce que** le côté refroidissement (54) de l'au moins un dispositif de refroidissement (50) est en liaison thermique avec l'environnement du dispositif de refroidissement (50), et l'au moins un dispositif de refroidissement (50) est en communication fluide avec l'environnement du dispositif de refroidissement (50), de sorte qu'un gaz, en particulier l'air, entourant l'au moins un dispositif de refroidissement (50) a la possibilité de s'écouler à travers le côté refroidissement (54) de l'au moins un dispositif de refroidissement (50).

2. Système de refroidissement (10) selon la revendication 1, **caractérisé en ce qu'**au moins une pompe (46, 56) est prévue pour pomper le fluide de refroidissement (30) de l'au moins un réservoir de fluide (20) à travers le côté réservoir (42) de l'au moins un condenseur (40) et/ou de l'au moins un réservoir de fluide (20) à travers le côté fluide (52) de l'au moins un dispositif de refroidissement (50).

3. Système de refroidissement (10) selon l'une quelconque des revendications 1 ou 2, **caractérisé en ce que** l'au moins un dispositif de refroidissement (50) est un échangeur de chaleur.

4. Système de refroidissement (10) selon l'une quelconque des revendications 1 à 3, **caractérisé en ce que** le fluide de refroidissement (30) est un liquide, comprenant notamment l'eau.

5. Système de refroidissement (10) selon l'une quelconque des revendications 1 à 4, **caractérisé en ce que** l'au moins un réservoir de fluide (20) comprend au moins une première cuve de fluide (22) et une seconde cuve de fluide (24) qui sont séparées l'une de l'autre, dans lequel la première cuve de fluide (22), la seconde cuve de fluide (24), le côté réservoir (42) de l'au moins un condenseur (40) et le côté fluide (52) de l'au moins un dispositif de refroidissement (50) sont en communication fluide, de sorte que le fluide de refroidissement (30) de la première cuve de fluide (22) a la possibilité de s'écouler à travers le côté réservoir (42) du condenseur (40) et d'entrer dans la seconde cuve de fluide (24), et dans lequel le fluide de refroidissement (30) de la seconde cuve de fluide (24) a la possibilité de s'écouler à travers le côté fluide (52) de l'au moins un dispositif de refroidissement (50) et d'entrer dans la première cuve de fluide (22).

6. Système de refroidissement selon l'une quelconque des revendications 1 à 5, **caractérisé en ce que** la communication fluide entre l'au moins un réservoir de fluide (20) et le côté réservoir (42) de l'au moins un condenseur (40) et entre l'au moins un réservoir de fluide (20) et le côté fluide (52) de l'au moins un dispositif de refroidissement (50) comprend au moins un tuyau de fluide.

7. Turbine à vapeur solaire (100) pour générer de l'électricité ou développer une puissance à l'arbre en vue d'un entraînement mécanique à partir de vapeur chauffée par solaire, comprenant un système de refroidissement (10) présentant les caractéristiques selon l'une quelconque des revendications 1 à 6.

8. Procédé de refroidissement et de condensation de vapeur provenant d'une turbine à vapeur solaire (100), comprenant les étapes suivantes :
- la fourniture d'un fluide de refroidissement (30) froid,
- le refroidissement et la condensation de la vapeur provenant de la turbine à vapeur solaire (100) en utilisant le fluide de refroidissement (30) froid et, ce faisant, le chauffage du fluide de refroidissement (30) pendant le fonctionnement de la turbine à vapeur solaire (100) toute la journée,
- le stockage du fluide de refroidissement (30) chauffé et
- le refroidissement du fluide de refroidissement chauffé (30) par l'air ambiant pendant que la turbine à vapeur solaire (100) est au repos toute la nuit,
- le refroidissement du fluide de refroidissement chauffé (30) par l'air ambiant pour le temps de fonctionnement du jour suivant et, simultanément, la production d'eau de refroidissement pour les besoins immédiats du condenseur (40) pendant que la turbine à vapeur solaire (100) fonctionne avec de la vapeur provenant d'un stockage de chaleur solaire toute la nuit,
dans lequel le procédé est exécuté avec un système de refroidissement (10) présentant les caractéristiques selon l'une quelconque des revendications 1 à 6.

9. Procédé selon la revendication 8, **caractérisé en ce que** le fluide de refroidissement (30) chauffé est stocké séparément du fluide de refroidissement (30) froid.
